# EUROPÄISCHE PATENTANMELDUNG

(11) **EP 3 626 501 A1**
(43) Veröffentlichungstag der Anmeldung: **25.03.2020**
(21) Anmeldenummer: 19196874.2
(22) Anmeldetag: 12.09.2019
(51) Int. Cl.: B60K 17/28, B60K 25/06

(54) **LEISTUNGSVERZWEIGTE GETRIEBESTRUKTUR**

(30) Priorität: 14.09.2018 DE 102018215684
(71) Anmelder: Deere & Company, Moline, IL 61265 (US)
(72) Erfinder: Fritz, Norbert, 68163 Mannheim (DE); Gugel, Rainer, 68163 Mannheim (DE); Müller, David, 68163 Mannheim (DE)
(74) Vertreter: Lavall, Christian Henner

(57) **Zusammenfassung**

Die Erfindung betrifft eine leistungsverzweigte Getriebestruktur, mit wenigstens drei Schnittstellen in Form von Ein- oder Ausgängen, um Antriebsleistung von einem Antrieb (14) an wenigstens einen Ausgang zu leiten, um angeschlossene Verbraucher zu versorgen. Diese weist mindestens zwei Variatorpfade, die jeweils einen mechanischen und einen elektrischen Pfad aufweisen, um Drehmoment und/oder die Drehzahl zu verändern, auf, wobei die Variatorpfade jeweils eine elektrische oder hydraulische Maschine (46, 48) und ein Summiergetriebe (20, 30) aufweisen, zur Summierung der Leistung von einem mechanischen Pfad und einem nicht-mechanischen Pfad, und eine Steuerung zur Regelung des Summiergetriebes, wobei die Getriebestruktur weiterhin eine
Leistungselektronik/Hydrauliksteuerung (40), die mit den elektrischen bzw. hydraulischen Maschinen verbunden ist, aufweist, und die Getriebestruktur die Antriebsleistung über die Variatorpfade leitet, so dass die elektrischen/hydraulischen Maschinen im generatorischen oder motorischen Betrieb betätigt werden können, um eine Leistungsunterdeckung oder ein Leistungsüberangebot an mindestens einem Ausgang der Getriebestruktur auszugleichen.

## Beschreibung

Die Erfindung betrifft eine leistungsverzweigte Getriebestruktur, mit wenigstens drei Schnittstellen in Form von Ein- oder Ausgängen, um Antriebsleistung von einem Antrieb an wenigstens einen Ausgang zu leiten, um angeschlossene Verbraucher zu versorgen.

Stufenlos leistungsverzweigte Getriebevorrichtungen sind in Baumaschinen und landwirtschaftlichen Arbeitsmaschinen, beispielsweise Traktoren, nach heutigem Stand der Technik insbesondere häufig im Premiumsegment anzutreffen und als hydraulischmechanisch leistungsverzweigte Getriebe ausgeführt. Der Leistungsfluss teilt sich hierbei in einen mechanischen Pfad, der regelmäßig über einen oder mehrere Planetenradsätze geführt wird, und in einen hydrostatischen Pfad auf, in dem die Leistung über einen hydrostatischen Variator geführt wird, mit dem eine stufenlose Einstellun+g der Übersetzung vorgenommen werden kann.

Aus der DE 197 49 074 C2 und der DE 10 2012 204 477 A1 sind stufenlos leistungsverzweigte Getriebevorrichtungen bekannt, bei denen der variable Pfad jeweils als elektrischer Variator ausgeführt ist. Bei derartigen elektromechanischen Getrieben wird sowohl mechanische als auch elektrische Leistung als Antriebsleistung genutzt.

Eine andere Entwicklungsrichtung bei Baumaschinen und landwirtschaftlichen Arbeitsfahrzeugen besteht in dem Aufbau eines zu dem bestehenden Bordnetz der Maschine zusätzlichen und mit einer höheren Nennspannung betriebenen zweiten Bordnetzes, mit dem elektrische Verbraucher, die eine derart höhere Nennspannung für ihren Betrieb benötigen, angetrieben werden können. Diese elektrischen Verbraucher können sowohl auf der Maschine an sich, als auch auf einem Anbaugerät angeordnet sein. Herkömmlicherweise wird dieses zusätzliche zweite Bordnetz auf der Maschine durch ein eigenes dafür vorgesehenes Generatorsystem erzeugt. Hierbei entstehen allerdings zusätzliche Produktkosten und es reduziert sich der Gesamtwirkungsgrad infolge der zusätzlichen Bauteile.

Es ist die Aufgabe der Erfindung, eine Getriebestruktur zur Verfügung zu stellen, die eine verbesserte Effizienz ermöglicht, wobei mehrere Ausgänge des Getriebesystems gleichzeitig versorgt werden sollen.

Die Aufgabe wird durch eine Getriebestruktur gemäß dem Hauptanspruch, sowie den weiteren nebengestellten Ansprüchen gelöst und beansprucht eine leistungsverzweigte Getriebestruktur, mit wenigstens drei Schnittstellen in Form von Ein- oder Ausgängen, um Antriebsleistung von einem Antrieb an wenigstens einen Ausgang zu leiten, um angeschlossene Verbraucher zu versorgen. Dabei weist die Getriebestruktur eine elektrische oder hydraulische Maschine zur Umwandlung der Antriebsleistung und mindestens zwei Variatorpfade auf, die jeweils einen mechanischen und einen elektrischen Pfad aufweisen, um Drehmoment und/oder die Drehzahl zu verändern, wobei die Variatorpfade jeweils eine elektrische oder hydraulische Maschine und ein Summiergetriebe aufweisen, zur Summierung der Leistung von einem mechanischen Pfad und einem nicht-mechanischen Pfad. Weiterhin weist die Getriebestruktur eine Steuerung zur Regelung des Summiergetriebes auf, wobei die Getriebestruktur weiterhin eine Leistungselektronik/Hydrauliksteuerung, die mit den elektrischen bzw. hydraulischen Maschinen verbunden ist, aufweist. Die Getriebestruktur leitet die Antriebsleistung über die Variatorpfade, so dass die elektrischen/hydraulischen Maschinen im generatorischen oder motorischen Betrieb betätigt werden können, um eine Leistungsunterdeckung oder ein Leistungsüberangebot an mindestens einem Ausgang der Getriebestruktur auszugleichen.

Durch die Anordnung der Getriebestruktur und die Verwendung von wenigstens zwei Variatoren kann der Gesamtwirkungsgrad gesteigert werden. Die Antriebsleistung, die meist von einem Verbrennungsmotor zur Verfügung gestellt wird, wird in einer ersten elektrischen/hydraulischen Maschine in elektrische oder hydraulische Leistung umgewandelt und an die Leistungselektronik zur Verfügung gestellt, welche diese nach Bedarf der Variatorpfade an diese verteilt, bzw. sogar wieder in mechanische Antriebsenergie umwandeln kann. Die Getriebestruktur ermöglicht eine sehr zeitnahe Anpassung der Leistungscharakteristik des Fahrzeugs, so dass unmittelbar auf geänderte Fahrbedingungen reagiert werden kann. Dies erlaubt es, etwa bei gezogenen Arbeitsgeräten eine Unterversorgung mit Antriebsleistung oder elektrischer/hydraulischer Leistung zu vermeiden.

In einer weiteren Ausbildung kann die Getriebestruktur ein oder mehrere zusätzliche Getriebe mit einer variablen Übersetzung in wenigstens einem Variatorpfad aufweisen.

Die Getriebestruktur kann hierbei mit beliebig vielen weiteren Variatoren versehen werden, wobei dadurch ebenfalls weitere Ein- und/oder Ausgänge der Getriebestruktur vorgehen sein können. Da die Anforderungen an landwirtschaftliche Arbeitsmaschinen stets steigen, kann hierbei die Getriebestruktur flexibel an geänderte Bedingungen angepasst werden.

Bei einer Weiterbildung kann die Leistungselektronik einen externen Versorgungsanschluss aufweisen, wobei der Versorgungsanschluss Leistung aufnehmen und/oder abgeben kann.

Die Getriebestruktur kann somit einen elektrischen Anschluss aufweisen, der durch die Leistungselektronik bedarfsgerecht versorgt wird und dazu dient, eine angeschlossene Vorrichtung, z.B. eine an die Arbeitsmaschine angehängte Vorrichtung mit elektrischen Leistung zu versorgen. Die elektrische Leistung die von einer angehängten Vorrichtung benötigt wird, kann zeitlichen Schwankungen unterliegen, etwa durch unterschiedliche Bodenverhältnisse, Steigungen oder Arbeitsanforderungen. Je nach Ausführung der Vorrichtung kann auch eine Rekuperation von elektrischer Leistung vorgesehen sein, z.B. bei Bremsbetrieb. Diese Schwankungen können durch die Getriebestruktur aufgefangen bzw. behoben werden, indem durch die Verwendung und Ansteuerung der elektrischen/hydraulischen Maschinen zusammen mit der Leistungselektronik elektrische Leistung an den Ausgang geleitet wird, oder vom Ausgang kommend umgewandelt und/oder an andere Abnehmer innerhalb der Getriebestruktur geleitet wird.

In einer Ausführung kann die Getriebestruktur einen Ausgang aufweisen, der mit einer Zapfwelle wirkungsverbunden ist, so dass Leistung an die Zapfwelle abgegeben oder von dieser aufgenommen werden kann.

Die Zapfwelle unterliegt zeitlichen Schwankungen im Leistungsbedarf. Diese können durch den Geländeverlauf, die Geschwindigkeit des Fahrzeugs oder der Arbeitsmaschine und durch die sich ändernden Bodenverhältnisse entstehen. Mittels der Getriebestruktur können diese Leistungsschwankungen ausgeglichen oder abgefangen werden. Es kann ein ruhigeres Arbeiten und eine gleichmäßige Leistungsanforderung an den Antrieb ermöglicht werden. Mittels der Leistungsaufnahme von der Zapfwelle kann Leistung in die Getriebestruktur geleitet und von dort an weitere Ausgänge geführt werden.

Bei eine weiteren Ausbildung kann ein Ausgang der Getriebestruktur mit einem Fahrantrieb wirkungsverbunden sein, so dass Leistung an den Fahrantrieb abgegeben oder von Getriebestruktur aufgenommen werden kann.

Der Fahrantrieb, der dazu dient, die Arbeitsmaschine anzutreiben, kann an einem Ausgang der Getriebestruktur angeschlossen bzw. vorgesehen sein. Die Versorgung des Fahrantriebs mit Antriebsleistung kann durch die Getriebestruktur gesteuert werden, wobei hierdurch selbst bei gleichbleibender Drehzahl oder Leistung des Antriebsmotors durch die zusätzliche Einbringung von Antriebsleistung durch die elektrischen/hydraulischen Maschinen eine Leistungsunterdeckung am Fahrantrieb behoben oder ganz vermieden werden kann. Zusätzlich kann durch die Getriebestruktur Fahrleistung aufgenommen werden, z. B. beim Abbremsen und mittels der elektrischen/hydraulischen Maschinen in elektrische/hydraulische Energie umgewandelt werden, wobei diese wiederrum zu Leistungsversorgung eines weiteren Ausgangs verwendet werden kann.

In einer Ausführung kann die Getriebestruktur einen Energiespeicher aufweisen, der zum Ausgleich von Leistungsunterdeckung oder Leistungsüberangebot verwendet wird.

Bei einer Weiterbildung kann ein Ausgang der Getriebestruktur mit einer Hydraulikpumpe oder einem Lüfter wirkungsverbunden sein.

Einer weitere Ausbildung betrifft ein Verfahren zur Steuerung einer leistungsverzweigten Getriebestruktur, um Antriebsleistung von einem Antrieb an wenigstens einen Ausgang zu leiten, um angeschlossene Verbraucher zu versorgen. Die Getriebestruktur weist wenigstens zwei Variatorpfade weist, in denen Antriebsleistung über einen mechanischen und einen elektrischen Pfad variiert wird ,wobei die Getriebestruktur eine Leistungselektronik aufweist, und das Verfahren die Leistungselektronik und die elektrischen Maschinen derart gleichzeitig ansteuert, dass Schwankungen in der Leistungsversorgung der Verbraucher durch die elektrischen Maschinen ausgeglichen werden.

Bei einer Weiterbildung kann jeder Variatorpfad einzeln angesteuert werden, um Leistung von einem Ausgang zu einem weiteren Ausgang zu leiten, so dass Leistung für jeden Ausgang aufgeteilt werden kann.

In einer weiteren Ausführung kann die Getriebestruktur Leistung durch wenigstens einen Ausgang aufnehmen und/oder diese an einen weiteren Ausgang leiten oder in elektrische/hydraulische Leistung umwandeln.

Weitere Ausführungen werden anhand der Figuren beschrieben.

Dabei zeigt
- Fig. 1: eine weitere Ausbildung der Getriebestruktur mit einem ersten Beispiel für einen Leistungsfluss;
- Fig. 2: eine weitere Ausbildung der Getriebestruktur mit einem weiteren Beispiel für einen Leistungsfluss;
- Fig. 3: eine weitere Ausbildung der Getriebestruktur mit einem weiteren Beispiel für einen Leistungsfluss;
- Fig. 4: eine weitere Ausbildung der Getriebestruktur mit einem weiteren Beispiel für einen Leistungsfluss;
- Fig. 5: eine weitere Ausbildung der Getriebestruktur mit einem weiteren Beispiel für einen Leistungsfluss;

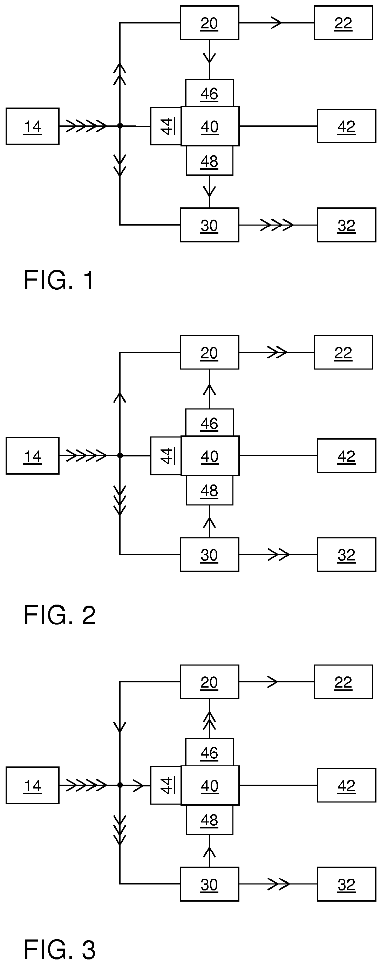

Die Getriebestruktur wird von einen Fahrzeugantrieb 14 mit primärer Leistung versorgt. In Fig. 1 ist der Leistungsfluss durch Pfeilsymbole dargestellt. Die Anzahl der Pfeile repräsentiert exemplarisch die Leistung für den jeweiligen Pfad in der Getriebestruktur. Die Leistungspfade sind mittels durchgezogener Linien dargestellt, auf denen wiederrum die Pfeile für die Leistung eingezeichnet sind. Stellen an denen sich die Leistungspfade kreuzen, stellen Schnittpunkte dar. Diese können konstruktiv durch eine Stirnradverzahnung oder weitere übliche Konstruktionen umgesetzt sein.

Die Leistungspfade verbinden den Antrieb 14 mit Summiergetrieben 20, 30 und einem Motor-Generator 44, der im motorischen Betrieb elektrische Leistung in mechanische Leistung umwandelt oder umgekehrt.

Die Getriebestruktur weist zwei Summiergetriebe 20 und 30 auf. Summiergetriebe können beispielsweise als ein Planetengetriebe ausgebildet sein. Jede Schnittstelle des Planetengetriebes ist dabei mit einem Zweig des Leistungspfades verbunden. Das in Figur 1 obere Summiergetriebe 20 ist dabei über einen Leistungspfad mit dem Antrieb 14 verbunden und gleichzeitig mit dem weiteren Summiergetriebe 30. Der zweite Leistungspfad verbindet das Summiergetriebe 20 mit einem Motor-Generator 46. Der dritte Leistungspfad verbindet das Summiergetriebe 20 mit einem Ausgang 22, der in diesem Beispiel der Ausgang zum Antrieb einer Zapfwelle sein kann.

Das zweite Summiergetriebe 30 ist mit einem Leistungspfad mit dem Antrieb 14 verbunden, mit einem zweiten Leistungspfad mit einem Motor-Generator 48 und mit einem dritten Leistungspfad mit einem Ausgang der Getriebestruktur, der ein Fahrantrieb 32 sein kann.

Weiterhin ist eine Leistungselektronik 40 vorhanden, die mit den Motor-Generatoren 44, 46, 48 in Verbindung steht und elektrische Leistung zwischen diesen transferieren und steuern kann. Die Leistungselektronik 40 ist weiterhin elektrisch mit einem weiteren Ausgang 42 der Getriebestruktur verbunden, so dass an diesem Ausgang elektrische Leistung ausgegeben werden kann.

In Fig. 1 ist eine mechanische Eingangsleistung auf dem Leistungspfad mittels 4 Pfeilen dargestellt, die vom Antrieb 14 zur Verfügung gestellt wird. Am drauffolgenden Knotenpunkt im Leistungspfad wird die Eingangsleistung aufgeteilt in einen Leistungspfad zum Summiergetriebe 20 und einen Leistungspfad zum Summiergetriebe 30. Durch die Steuerung mittels der Leistungselektronik 40 wird am Summiergetriebe 20 ein Teil, dargestellt durch ein Pfeilsymbol, von der Eingangsleistung abgezweigt und im Motor-Generator 46 in elektrische Leistung umgewandelt. Diese wird durch die Leistungselektronik weiter zum Motor-Generator 48 geleitet und dort erneut in mechanische Leistung umgewandelt und in das Summiergetriebe 30 geführt. Im Summiergetriebe 30 wird der mechanischen Leistung, die vom Antrieb 14 erzeugt wird die zusätzliche Leistung hinzugefügt und an den Ausgang 32, den Fahrantrieb abgegeben. Die Leistungsmenge ist symbolisch durch drei Pfeilsymbole dargestellt. Die Getriebestruktur kann verwendet werden, um kurzzeitige Anforderungen des Fahrantriebs zu decken, so dass es zu keiner Unterdeckung der Fahrleistung kommt.

Fig. 2 zeigt die Getriebestruktur mit einem weiteren Konzept der Leistungsversorgung. Die Eingangsleistung vom Antrieb 14 wird aufgeteilt, so dass ein Anteil, gezeigt durch ein Pfeilsymbol zum Summiergetriebe 20 und drei Anteile zum Summiergetriebe 30 geleitet werden. Das Summiergetriebe 30 wird derart angesteuert, dass ein Anteil der Leistung im Motor-Generator 48 in elektrische Leistung umgewandelt und zum Motor-Generator 46 geführt wird. Die verbleibenden zwei Anteile werden vom Summiergetriebe dem Ausgang 32 zum Fahrantrieb zur Verfügung gestellt. Der Motor- Generator 46 wandelt die elektrische wieder in mechanische Leistung um, wobei diese dann im Summiergetriebe 20 dem einen Leistungsanteil hinzugefügt wird. Die resultierenden zwei Leistungsanteile werden dem Ausgang 22 zum Zapfwellenantrieb zugeführt. Hierdurch ist dargestellt, wie mittels der Getriebestruktur zwei Ausgänge mit Leistung versorgt werden können, wobei eine kurzzeitige Umleitung der Leistung ermöglicht ist.

In Fig. 3 werden die symbolischen vier Leistungsanteile vom Antrieb 14 kommend derart aufgeteilt, dass drei Anteile an das Summiergetriebe 30 geleitet werden und ein Leistungsanteil an den Motor-Generator 44. Dieser wandelt die mechanische Leistung entsprechend in elektrische Leistung um. Gesteuert durch die Leistungselektronik 40 wird der Anteil der Leistung zum den Motor-Generator 46 geführt. Zusätzlich wird von der mechanischen Leistung im Summiergetriebe 30 ein Anteil abgezweigt und an den Motor-Generator 48 geleitet. Dort wird diese ebenfalls in elektrische Leistung umwandelt, wobei diese zusammen mit dem Leistungsanteil aus dem Motor-Generator 44 zusammen an den Motor-Generator 46 geleitet wird und nach der Umwandlung in mechanische Leistung über das Summiergetriebe 20 zu einem Anteil an den Ausgang 22 zur Versorgung der Zapfwelle und zu einem Anteil an das Summiergetriebe 30 zurückgeführt wird. Hierbei kann die nicht benötigte Leistung zum Antrieb der Zapfwelle umgelenkt werden, so dass weitere Komponenten durch die Getriebestruktur versorgt werden können.

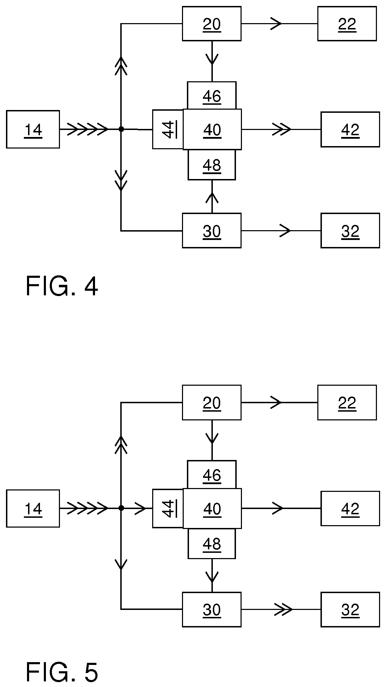

Fig. 4 stellt dar, wie zum Beispiel alle Ausgänge 22, 32, 42 gleichzeitig mit Leistung versorgt werden können. Hierbei wird zunächst die Leistung derart aufgeteilt, dass ein Anteil in den Motor-Generator 44 und jeweils zwei Anteile zu den Summiergetrieben 20, 30 geleitet werden. Durch die Summiergetriebe wird jeweils ein Anteil zu den zugeordneten Motor-Generatoren 46, 48 geführt und in elektrische Leistung umgewandelt. Die Leistungselektronik steuert die Summierung der Leistungsanteile und leitet diese dem Ausgang 42 zur externen elektrischen Leistungsversorgung zu.

Fig. 5 zeigt in einem weiteren Beispiel, dass die Getriebestruktur es ermöglicht, die Leistung von einem Summiergetriebe zum anderen Summiergetriebe über die Leistungselektronik zu leiten, um eine Leistungsanforderung an einem der Ausgänge zu decken. Im gezeigten Beispiel wird ein Anteil der mechanischen Leistung im Summiergetriebe 20 abgezweigt und durch die Leistungselektronik geführt. Abschließend wird der Leistungsanteil im Summiergetriebe 30 wieder dem restlichen Anteil der mechanischen Leistung hinzugefügt und an den Ausgang 32 für den Fahrantrieb geleitet. Es kann je nach den anliegenden Leistungsanforderungen an den Ausgängen insbesondere zwischen der Regelung nach Fig. 4 und Fig. 5 geschaltet werden, so dass eine unmittelbare Reaktion auf die anliegenden Lasten ermöglicht wird.

In einem Modus der Getriebestruktur, in dem von den Ausgängen Leistung an die Getriebestruktur abgegeben wird, kann diese durch die Summiergetriebe an die Motor-Generatoren geleitet und rekuperiert werden. Mittels eines Energiespeichers kann die elektrische Leistung für einen späteren Verwendungsfall gespeichert werden. Bei einer zusätzlichen Abgabe von elektrischer Leistung zur mechanischen Leistung des Verbrennungsmotors kann an den Ausgängen auch eine sogenannte Boostfunktion erzielt werden, die einen kurzzeitigen Leistungsschub zur Verfügung stellt, um eine Lastspitze abzudecken.

Durch die vorgeschlagene Getriebestruktur kann die Anzahl der mechanischen Komponenten reduziert werden im Vergleich zu einer üblichen Getriebestruktur, da nicht für jeden Ausgang eine Durchleitung der mechanischen Leistung in voller Höhe erzielt werden muss. Dabei können gleichzeitig auch die Komponenten mit einer geringeren Baugröße ausgeführt werden, so dass die Masse verringert werden kann.

Aufgrund der Reduzierung der Bauteile als auch der Bauteilgrößen sinkt gleichzeitig die Komplexität der Getriebestruktur, wobei die Wartung mit weniger Aufwand durchführbar ist.

## Patentansprüche

1. Leistungsverzweigte Getriebestruktur,
mit wenigstens drei Schnittstellen in Form von Ein- oder Ausgängen,
um Antriebsleistung von einem Antrieb an wenigstens einen Ausgang zu leiten, um angeschlossene Verbraucher zu versorgen, aufweisend:
eine elektrische oder hydraulische Maschine zur Umwandlung der Antriebsleistung, mindestens zwei Variatorpfade, die jeweils einen mechanischen und einen elektrischen Pfad aufweisen, um Drehmoment und/oder die Drehzahl zu verändern,
wobei die Variatorpfade jeweils eine elektrische oder hydraulische Maschine und ein Summiergetriebe aufweisen, zur Summierung der Leistung von einem mechanischen Pfad und einem nicht-mechanischen Pfad, und
eine Steuerung zur Regelung des Summiergetriebes,
wobei die Getriebestruktur weiterhin eine Leistungselektronik/Hydrauliksteuerung, die mit den elektrischen bzw. hydraulischen Maschinen verbunden ist, aufweist,
und die Getriebestruktur die Antriebsleistung über die Variatorpfade leitet, so dass die elektrischen/hydraulischen Maschinen im generatorischen oder motorischen Betrieb betätigt werden können, um eine Leistungsunterdeckung oder ein Leistungsüberangebot an mindestens einem Ausgang der Getriebestruktur auszugleichen.

2. Getriebestruktur nach Anspruch 1, wobei
die Getriebestruktur weiterhin ein oder mehrere zusätzliche Getriebe mit einer variablen Übersetzung in wenigstens einem Variatorpfad aufweisen kann.

3. Getriebestruktur nach Anspruch 1 oder 2, wobei die Leistungselektronik einen externen Versorgungsanschluss hat, und der Versorgungsanschluss Leistung aufnehmen oder abgeben kann.

4. Getriebestruktur nach einem der vorangehenden Ansprüche, wobei
ein Ausgang der Getriebestruktur mit einer Zapfwelle wirkungsverbunden ist, so dass Leistung an die Zapfwelle abgegeben oder von dieser aufgenommen werden kann.

5. Getriebestruktur nach einem der vorangehenden Ansprüche, wobei ein Ausgang der Getriebestruktur mit einem Fahrabtrieb wirkungsverbunden ist, so dass Leistung an den Fahrabtrieb abgegeben oder von der Getriebestruktur aufgenommen werden kann.

6. Getriebestruktur nach einem der vorangehenden Ansprüche, wobei diese weiterhin einen Energiespeicher aufweist, zum Ausgleich von Leistungsunterdeckung oder Leistungsüberangebot.

7. Getriebestruktur nach einem der vorangehenden Ansprüche, wobei ein Ausgang der Getriebestruktur mit einer Hydraulikpumpe oder einem Lüfter verbunden ist.

8. Verfahren zur Steuerung einer leistungsverzweigten Getriebestruktur, um Antriebsleistung von einem Antrieb an wenigstens einen Ausgang zu leiten, um angeschlossene Verbraucher zu versorgen,
wobei die Getriebestruktur wenigstens zwei Variatorpfade aufweist, in denen Antriebsleistung über einen mechanischen und einen elektrischen Pfad variiert wird,
wobei die Getriebestruktur eine Leistungselektronik aufweist, und
das Verfahren die Leistungselektronik und die elektrischen Maschinen derart gleichzeitig ansteuert, dass Schwankungen in der Leistungsversorgung der Verbraucher durch die elektrischen Maschinen ausgeglichen werden.

9. Verfahren nach Anspruch 8, wobei jeder Variatorpfad einzeln angesteuert wird, um Leistung von einem Ausgang zu einem weiteren Ausgang zu leiten, so dass Leistung für jeden Ausgang aufgeteilt werden kann.

10. Verfahren nach Anspruch 8 oder 9, wobei die Getriebestruktur Leistung durch wenigstens einen Ausgang aufnimmt und/oder diese an einen weiteren Ausgang leitet oder in elektrische oder hydraulische Leistung umwandelt.
